# EUROPÄISCHE PATENTANMELDUNG

(11) **EP 2 853 835 A2**
(43) Veröffentlichungstag der Anmeldung: **01.04.2015**
(21) Anmeldenummer: 14185678.1
(22) Anmeldetag: 20.09.2014
(51) Int. Cl.: F24F 13/28, F24F 3/16

(54) **Vorrichtung zum Reinigen der Raumluft**

(30) Priorität: 26.09.2013 DE 102013110631
(71) Anmelder: Haslach Luft und Schalltechnik GmbH, 87437 Kempten (DE)
(72) Erfinder: Bogatzki, Janusz, 87437 Kempten (DE)
(74) Vertreter: Hutzelmann, Gerhard

(57) **Zusammenfassung**

Vorrichtung (1) zum Reinigen der Raumluft von Stäuben, insbesondere von Feinstäuben, Aerosolen, Dämpfen, Gerüchen oder dergleichen, wobei ein Filterelement (7) vorgesehen ist, durch das belastete Raumluft mit einem Gebläse (9) gesaugt wird.

## Beschreibung

Die Erfindung bezieht sich auf eine Vorrichtung zum Reinigen der Raumluft von Stäuben, insbesondere von Feinstäuben, Aerosolen, Dämpfen, Gerüchen oder dergleichen.

Gerade in Produktionsstätten und Werkstätten fallen vielerlei Stäube an, die störend, ja zum Teil auch gesundheitsschädlich sind.

Von daher muss oftmals mit erheblichem Aufwand die Raumluft über Lüftungsanlagen umgewälzt, ausgetauscht und/oder gereinigt werden. Diese Lüftungsanlagen sind fest installiert und bedürfen einen erheblichen Wartungs- und Instandhaltungsaufwand. Viele Stäube neigen in höherer Konzentration zudem auch zum explodieren. Aus diesem Grund müssen die Filteranlagen explosionsgeschützt ausgeführt sein und eine entsprechende Kennzeichnung aufweisen. Desweiteren haben diese Lüftungsanlagen einen erheblichen Energiebedarf.

Aufgabe der Erfindung ist eine Vorrichtung zu schaffen, die diese Nachteile nicht aufweist, leicht aufzustellen ist und zudem mobil genutzt werden kann.

Diese Aufgabe wird erfindungsgemäß dadurch gelöst, daß ein Filterelement vorgesehen ist, durch das belastete Raumluft mit einem Gebläse gesaugt wird.

Hierdurch kann die Vorrichtung kompakt und einfach aufgebaut sein.

Dabei hat es sich als sehr vorteilhaft erwiesen, wenn das Filterelement im wesentlichen frei im Raum angeordnet ist.

Dadurch werden hohe Staubkonzentrationen in einem abgeschlossenen Raum verhindert, so daß es zu keinen explosionsgefährlichen Konzentrationen kommen kann. Auf eine explosionsgeschützte Ausgestaltung der Vorrichtung kann verzichtet werden. Zudem wird die

Äußerst vorteilhaft ist es erfindungsgemäß auch, wenn nach dem Gebläse weitere Filter angeordnet sind.

Durch diese weiteren Filter können auch Dämpfe, Gerüche oder Feinststäube ausgefiltert werden.

Eine weitere sehr vorteilhafte Ausgestaltung der Erfindung liegt vor, wenn eine oder mehrere Ausblasöffnungen vorgesehen sind, durch die die gefilterte Luft ausgeblasen wird.

Damit kann die gereinigte Luft großflächig verteilt werden.

Dabei ist es sehr vorteilhaft, wenn Leiteinrichtungen zur gezielten Ausblasung der gefilterten Luft vorgesehen sind.

Damit kann sehr genau eingestellt werden, wie die gereinigte Luft verteilt werden soll. Vor allem kann eine wenigstens annähernd zugfreie Luftverteilung vorgenommen werden.

Ebenfalls sehr vorteilhaft ist es gemäß einer weiteren Ausgestaltung der Erfindung auch, wenn unter dem Filterelement eine Auffangeinrichtung für ausgefilterte Partikel und/oder Flüssigkeiten vorgesehen ist.

Hierdurch lassen sich ausgefilterte Partikel und/oder Flüssigkeiten sehr gut entsorgen.

Eine weitere sehr vorteilhafte Fortbildung der Erfindung liegt vor, wenn eine Einrichtung zum Abreinigen des Filterelements vorgesehen ist.

Hierdurch kann die Nutzungsdauer des Filterelements in der Regel vervielfacht werden, wobei die tatsächlich mögliche Nutzungsdauer auch von den zu filternden Partikeln und den eingesetzten Filtermaterialien abhängt.

Dabei hat es sich als sehr vorteilhaft erwiesen, wenn zur Abreinigung des Filterelements eine mechanische Vorrichtung zum Abbürsten, Abschütteln oder dergleichen vorgesehen ist.

Ebenfalls sehr vorteilhaft ist es erfindungsgemäß, wenn zur Abreinigung des Filterelements eine pneumatische Vorrichtung vorgesehen ist.

Bei beiden Varianten wird eine sehr gute Abreinigung erreicht, ohne die ausgefilterten Stäube wieder an die Raumluft abzugeben. Bei einer pneumatischen Abreinigung kann der Luftstoß beispielsweise so eingestellt werden, daß die Partikel das Gehäuse der Vorrichtung nicht verlassen und herabfallen.

Erfindungsgemäß hat es sich auch als äußerst vorteilhaft erwiesen, wenn eine Steuerung zur Regelung des Saugzuges und zur Leistungseinstellung vorgesehen ist, wobei zusätzliche Funktionen wie eine automatische Abreinigung, Anpassung an veränderte Partikelgehalte, Warnmeldungen bei verschmutzten Filterelement oder Filtern oder dergleichen vorgesehen sein können.

Hierdurch kann ein sparsamer und sicherer Betrieb der Vorrichtung gewährleistet werden.

Eine äußerst vorteilhafte Ausgestaltung der Erfindung liegt auch vor, wenn die Vorrichtung säulenförmig aufgebaut ist.

Durch eine säulenförmige Ausgestaltung kann verschmutzte Luft im unteren Bereich, also genau dort, wo Mitarbeiter die Stäube aufnehmen würden, abgesaugt und gefiltert werden und im oberen Bereich gereinigte Luft ausgeblasen werden. Zudem wird durch die säulenförmige Ausgestaltung eine Ansaugung aus allen horizontalen Richtungen ermöglicht, wodurch eine wenigstens annähernd zugfreie Umwälzung ermöglicht wird. Die allseitige Ansaugung kann durch Leiteinrichtungen eingeschränkt werden.

Dabei hat es sich erfindungsgemäß als sehr vorteilhaft erwiesen, wenn das Filterelement im wesentlichen zylindrisch ausgebildet ist und Luftzuführungen im wesentlichen über den gesamten Umfang verteilt angeordnet sind.

Hierdurch wird eine sehr gute Aufnahme von verunreinigter Luft ermöglicht.

Äußerst vorteilhaft ist es auch, wenn die Ausblasöffnungen oberhalb des Filterelements und des Gebläses und eventuell weiterer Filter angeordnet sind.

Hiermit wird verhindert, daß bodennahe verunreinigte Luft verwirbelt wird und so von Personen eingeatmet werden kann.

Weiterhin ist es erfindungsgemäß sehr vorteilhaft, wenn die Ausblasöffnungen nach oben gerichtet sind.

Damit wird eine sehr gute Durchwälzung der Raumluft ohne wesentliche Verwirbelungen ermöglicht.

Eine weitere sehr vorteilhafte Fortbildung der Erfindung liegt auch vor, wenn die Ausblasöffnungen wenigstens über einen Teil des Umfangs der Vorrichtung verteilt sind.

Damit wird eine gleichmäßige und wenigstens weitgehend zugfreie Luftverteilung sichergestellt.

Im folgenden wird die Erfindung anhand eines Ausführungsbeispiels veranschaulicht.

Dabei zeigen:
- Fig. 1: ein Schaubild einer erfindungsgemäßen Vorrichtung zum Reinigen der Raumluft,

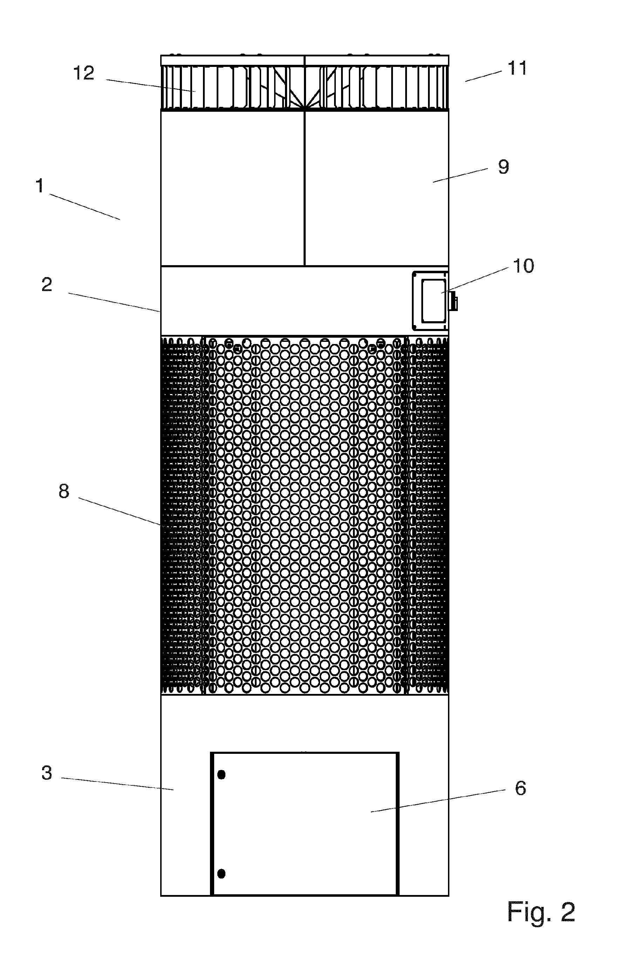

- Fig. 2: eine Seitenansicht dieser Vorrichtung,

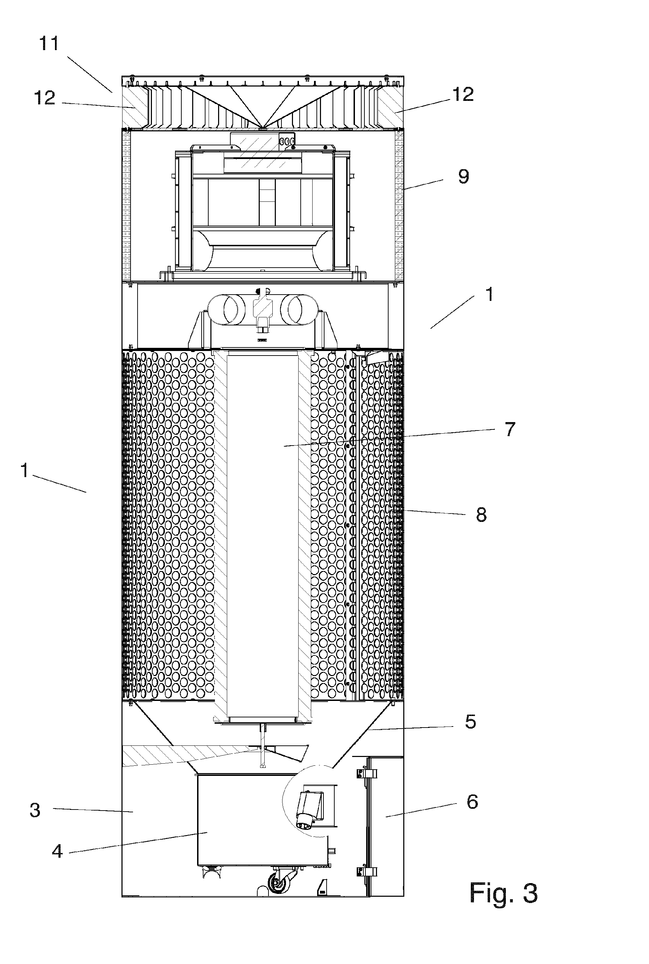

- Fig. 3: einen Vertikalschnitt durch dieselbe Vorrichtung, und

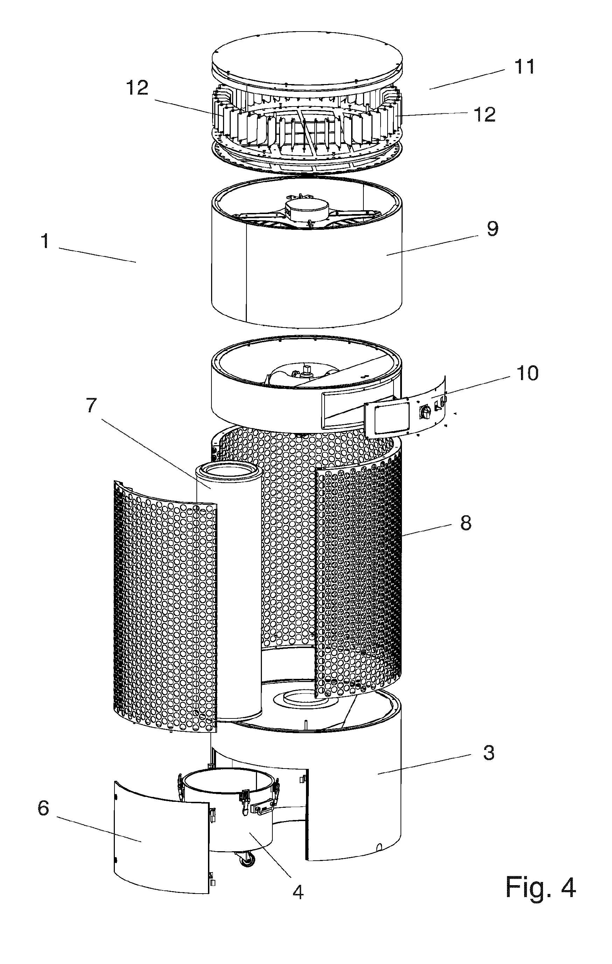

- Fig. 4: eine Explosionszeichnung der Vorrichtung.

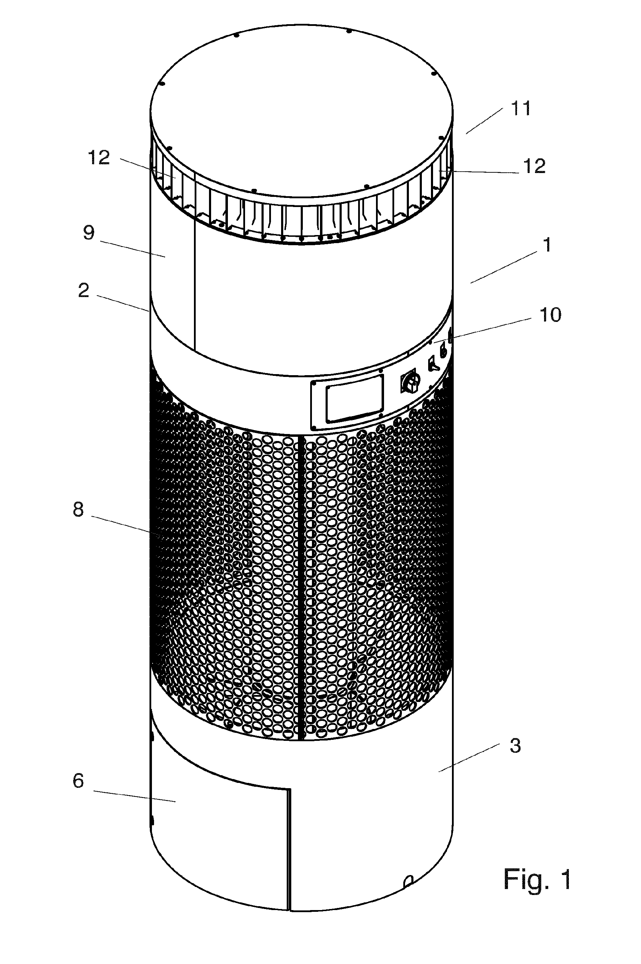

Mit 1 ist in Fig. 1 eine Vorrichtung zum Reinigen der Raumluft bezeichnet. Die Vorrichtung besteht im wesentlichen aus einem säulenförmigen Gehäuse 2, in dem die Komponenten der Vorrichtung 1 angeordnet sind. Am unteren Ende des Gehäuses ist eine Auffangeinrichtung 3 für ausgefilterte Partikel und Flüssigkeiten vorgesehen. Die Auffangeinrichtung 3 besteht dabei aus einem Auffangbehälter 4 und einem darüber angeordneten Trichter 5. Der Neigungswinkel des Trichters 5 kann entsprechend den Stäuben und auch der Glätte des Trichtermaterials gewählt werden, so daß abrieselnde Partikel und Föüssigkeiten in den Auffangbehälter 4 gleiten. Neigungswinkel zwischen 30 und 60 ° haben sich als besonders geeignet erwiesen. Für eine bessere Zugänglichkeit zum Auffangbehälter 4 ist eine Türe 6 vorgesehen.

Oberhalb des Trichters 5 ist ein senkrecht stehendes, in diesem Ausführungsbeispiel zylindrisches Filterelement 7 vorgesehen. Das Filterelement 7 ist von einem Lochblech 8 umgeben, das Teil der Vorrichtung 1 ist. Damit ist die wirksame Oberfläche des Filterelements 7 frei im zu reinigenden Raum positioniert. Es ist kein abgeschlossener Raum vorhanden, der eine explosionsgeschützte Ausgestaltung der Vorrichtung 1 bedingen würde. Zudem wird das Filterelement 7 über den gesamten Umfang angeströmt, wodurch die gesamte Filteroberfläche wirksam ist.

Aufgrund dieser Anordnung kann die Filteroberfläche groß gewählt werden, was den Differenzdruck zwischen freier Seite und Saugseite des Filters erheblich verringert.

Es wird aus diesem Grund im Vergleich zu geschlossenen Systemen weniger Energie benötigt, um einen hohen Luftdurchsatz zu erreichen.

Das Lochblech 8 ist wenigstens in einem Teilbereich öffenbar ausgestaltet um eine leichte Auswechselbarkeit des Filterelements 7 sicherzustellen.

Oberhalb des Filterelements 7 ist innerhalb der Vorrichtung 1 ein Sauggebläse 9 vorgesehen, welches Luft durch das Filterelement 7 saugt. Dem Sauggebläse 9 ist eine Steuereinrichtung 10 zugeordnet. Diese kann zur Einstellung der Drehzahl des Gebläses 9 genutzt werden. Es ist aber auch denkbar, daß die Steuereinrichtung 10 eine automatische Abreinigung des Filterelements 7 steuert. Auslöser für eine automatische Abreinigung kann beispielsweise ein ansteigender Saugwiderstand sein, der beispielsweise über eine Zunahme der für den Betrieb notwendigen Leistung ermittelt werden kann. Auch eine Steuerung in Abhängigkeit der Tageszeiten, der anfallenden Schadstoffbelastung oder dergleichen ist denkbar.

Oberhalb des Sauggebläses 9 können weitere, nicht dargestellte Filter vorgesehen werden, die beispielsweise Gerüche oder Schadstoffe oder auch lungengängige Feinststäube auszufiltern vermögen, die durch das Filterelement 7 unter Umständen nicht abgeschieden werden können.

Auch denkbar ist es, daß ein Heizregister und/oder eine Befeuchtungseinrichtung vorgesehen ist, um die Raumluft zu erwärmen bzw. den Feuchtigkeitsgehalt anzupassen. Anstelle eines Heizregisters kann auch ein Wärmetauscher vorgesehen werden, mit dessen Hilfe die gefilterte Luft gekühlt werden kann.

Darauf folgt dann eine Ausblasöffnung 11. Diese ist im vorliegenden Ausführungsbeispiel wiederum über den gesamten Umfang der Vorrichtung 1 angeordnet und weist einzelne Leitblenden 12 auf, die individuell eingestellt werden können um der ausgeblasenen Luft eine Richtung geben zu können.

Durch die oben an der Vorrichtung 1 ausgeblasene, gereinigte Luft werden in der restlichen Raumluft verteilte Schwebeteilchen regelrecht nach unten gedrückt und zur Vorrichtung 1 hin mitgerissen, obwohl durch die über den gesamten Umfang verteilte Ansaugung und Ausblasung kein störender Luftzug entsteht. Vielmehr reicht die leichte Strömung bereits aus, einen Großteil der Partikel, Dämpfe, Flüssigkeitströpfchen in Richtung des Filterelements 7 zu transportieren und dort abzuscheiden.

Es ist auch denkbar, daß die Luftausblasung nach oben erfolgt, und nicht seitlich, wie im Ausführungsbeispiel dargestellt.

Das Filterelement 7 kann als Langzeitfilter oder als Einmalfilter ausgebildet sein. Wird es als Langzeitfilter vorgesehen, ist eine regelmäßige Abreinigung notwendig.

Für die Abreinigung kann durch eine oder mehrere, nicht dargestellte Druckluftdüsen im Inneren des Filterelements 7 eine Druckwelle erzeugt werden, die dazu führt, daß sich an der Außenseite angelagerte Partikel lösen und nach unten in den Trichter 5 und damit in den Auffangbehälter 4 rieseln. Die Druckwelle sollte dabei zweckmäßigerweise so bemessen sein, daß die Partikel nicht durch das Lochblech 8 austreten, sondern in der Vorrichtung 1 verbleiben.

Eine solche Druckwelle kann beispielsweise auch durch akustische oder mechanische Schwingungen erzeugt werden.

Daneben ist eine mechanische Abreinigung denkbar, die beispielsweise durch Abbürsten oder dergleichen erfolgen kann.

Insgesamt ist wesentlich für die vorliegende Erfindung, daß durch die konstruktive Ausgestaltung der Vorrichtung 1 eine sehr große Filteroberfläche eingesetzt werden kann. Es ist dabei nicht relevant, ob die Vorrichtung 1 dabei in Form einer runden Säule ausgebildet ist, oder andere Formen einnimmt. Vielmehr ist es wesentlich, daß der Filter frei im Raum positioniert ist, wodurch Verluste durch Luftleitung und auch zusätzlicher Aufwand zur explosionsgeschützten Ausgestaltung entfallen.

Auch liegende Ausgestaltungen sind denkbar, um schwerere, bodennahe Partikel besser aufzunehmen. In diesem Fall müsste die ausströmende Luft nach oben geleitet werden, um Verwirbelungen zu vermeiden.

Insgesamt wird eine kostengünstige und sparsame Möglichkeit geschaffen, belastete Luft, vor allem in Produktionsstätten und Werkstätten zu reinigen.

## Patentansprüche

1. Vorrichtung (1) zum Reinigen der Raumluft von Stäuben, insbesondere von Feinstäuben, Aerosolen, Dämpfen, Gerüchen oder dergleichen, **dadurch gekennzeichnet, daß** ein Filterelement (7) vorgesehen ist, durch das belastete Raumluft mit einem Gebläse (9) gesaugt wird.

2. Vorrichtung nach Anspruch 1, **dadurch gekennzeichnet, daß** das Filterelement (7) im wesentlichen frei im Raum angeordnet ist.

3. Vorrichtung nach Anspruch 1 oder 2, **dadurch gekennzeichnet, daß** nach dem Gebläse (9) weitere Filter angeordnet sind.

4. Vorrichtung nach Anspruch 1, 2 oder 3, **dadurch gekennzeichnet, daß** eine oder mehrere Ausblasöffnungen (11) vorgesehen sind, durch die die gefilterte Luft ausgeblasen wird.

5. Vorrichtung nach Anspruch 4, **dadurch gekennzeichnet, daß** Leiteinrichtungen (12) zur gezielten Ausblasung der gefilterten Luft vorgesehen sind.

6. Vorrichtung nach einem der vorangehenden Ansprüche, **dadurch gekennzeichnet, daß** unter dem Filterelement (7) eine Auffangeinrichtung (3) für ausgefilterte Partikel und/oder Flüssigkeiten vorgesehen ist.

7. Vorrichtung nach einem der vorangehenden Ansprüche, **dadurch gekennzeichnet, daß** eine Einrichtung zum Abreinigen des Filterelements (7) vorgesehen ist.

8. Vorrichtung nach Anspruch 7, **dadurch gekennzeichnet, daß** zur Abreinigung des Filterelements (7) eine mechanische Vorrichtung zum Abbürsten, Abschütteln oder dergleichen vorgesehen ist.

9. Vorrichtung nach Anspruch 7, **dadurch gekennzeichnet, daß** zur Abreinigung des Filterelements (7) eine pneumatische Vorrichtung vorgesehen ist.

10. Vorrichtung nach einem der vorangehenden Ansprüche, **dadurch gekennzeichnet, daß** eine Steuerung (10) zur Regelung des Saugzuges und zur Leistungseinstellung vorgesehen ist, wobei zusätzliche Funktionen wie eine automatische Abreinigung, Anpassung an veränderte Partikelgehalte, Warnmeldungen bei verschmutzten Filterelement (7) oder Filtern oder dergleichen vorgesehen sein können.

11. Vorrichtung nach einem der vorangehenden Ansprüche, **dadurch gekennzeichnet, daß** die Vorrichtung (1) säulenförmig aufgebaut ist.

12. Vorrichtung nach einem der vorangehenden Ansprüche, **dadurch gekennzeichnet, daß** das Filterelement im wesentlichen zylindrisch ausgebildet ist und Luftzuführungen im wesentlichen über den gesamten Umfang verteilt angeordnet sind.

13. Vorrichtung nach einem der vorangehenden Ansprüche, **dadurch gekennzeichnet, daß** die Ausblasöffnungen oberhalb des Filterelements und des Gebläses und eventuell weiterer Filter angeordnet sind.

14. Vorrichtung nach einem der vorangehenden Ansprüche, **dadurch gekennzeichnet, daß** die Ausblasöffnungen nach oben gerichtet sind.

15. Vorrichtung nach einem der vorangehenden Ansprüche, **dadurch gekennzeichnet, daß** die Ausblasöffnungen wenigstens über einen Teil des Umfangs der Vorrichtung verteilt sind.
